**Europäisches Patentamt**

**European Patent Office**

**Office européen des brevets**

(19)

(11) Veröffentlichungsnummer. **0 194 672**

**A2**

(12) # EUROPÄISCHE PATENTANMELDUNG

(21) Anmeldenummer: **86103336.3**

(22) Anmeldetag: **12.03.86**

(51) Int. Cl.⁴: **F 16 H 21/44**

(30) Priorität: **15.03.85 DE 3509399**

(43) Veröffentlichungstag der Anmeldung:
**17.09.86 Patentblatt 86/38**

(84) Benannte Vertragsstaaten:
**AT BE CH FR GB IT LI LU NL SE**

(71) Anmelder: **Stähle, Kurt**
**Liebenzeller Strasse 16**
**D-7531 Neuhausen-Steinegg(DE)**

(72) Erfinder: **Stähle, Kurt**
**Liebenzeller Strasse 16**
**D-7531 Neuhausen-Steinegg(DE)**

(74) Vertreter: **Frank, Gerhard, Dipl.-Phys. et al,**
**Patentanwälte Dr. F. Mayer & G. Frank Westliche 24**
**D-7530 Pforzheim(DE)**

(54) **Mechanischer Kraftwandler.**

(57) Ein mechanischer Kraftwandler weist ein elastisch verformbares Element in Form einer Biegefeder auf, wobei die Kraft oder die Gegenkraft wahlweise entweder im Mitterlbereich der Biegefeder und im wesentlichen senkrecht zur Längsachse der Biegefeder angreifen oder aber in einem Endpunkt der Biegefeder und im wesentlichen in deren Längsachse im gestreckten Zustand. Die bei diesen Verhältnissen gegebene Kräftecharakteristik läßt sich besonders vorteilhaft in Verbindung mit äußeren Kräften anwenden, beispielsweise dem Druck eines pneumatischen Systems oder der Schaltkraft eines Mikroschalters, so daß der erfindungsgemäße Kraftwandler beispielweise als Bauelement in Ventilen oder Druckschaltern bzw. Druckreglern Einsatz finden kann.

FIG.1

EP 0 194 672 A2

Kurt Stähle, Liebenzeller Straße 16, 7531 Neuhausen/Steinegg

Mechanischer Kraftwandler.

Die Erfindung betrifft einen mechanischen Kraftwandler mit einem elastisch verformbaren Element, an dem eine Kraft angreift und gegen eine Gegenkraft wirkt.

Aufgabe der Erfindung ist es, einen derartigen mechanischen Kraftwandler so auszubilden, daß er zu verschiedensten Einsatzzwecken brauchbar ist, beispielsweise als Ventil, Druckschalter oder Druckregler und zu einer baulichen Vereinfachung und Kosteneinsparung bei diesen Bauteilen führt.

Erfindungsgemäß wird die Aufgabe durch den kennzeichnenden Teil des Patentanspruches 1 gelöst.

Die Grundidee der Erfindung besteht darin, daß zumindest eine Biegefeder als elastisch verformbares Element infolge der Kennliniencharakteristik der an ihr angreifenden Kräfte und der daraus resultierenden Wege (Hub, Schaltweg) ideale Voraussetzungen bietet, da sie auch die Möglichkeit einer Kraftwandlung nach Art eines Kniehebelsystems bietet.

Besondere Vorteile ergeben sich bei der Verwendung dieses Schalters in einem Ventil, da ihre bei Durchbiegung auftretende Streckkraft die Schließkraft des hydraulischen oder pneumatischen Systems bilden kann, wobei die für die entsprechende Durchbiegung aufzubiegende Kraft nur ein Bruchteil der abrufbaren Streckkraft ist, so daß Ventilkonstruktionen mit äußerst geringer Leistungsaufnahme und damit geringen Abmessungen und erhebliche Kosteneinsparungen beim verwendeten Magnetschaltsystem möglich werden.

Weitere bevorzugte Ausgestaltungen der Erfindung sind Unteransprüchen zu entnehmen.

Mehrere Ausführungsbeispiele der Erfindung werden anhand von Zeichnungen näher erläutert, es zeigen:

Figur 1:        Eine schematische Darstellung des Schalters und der auftretenden Kräfte,

Figur 2:        die Biegekennlinie und die Biegekraftkennlinie des Schalters gemäß Fig. 1,

Figur 3:        eine Biegekennlinie einer definierten Biegefeder mit angelegter Knickkraft P,

Figur 4:        eine Rückstellkraft-Durchbiegungs-Kennlinienfeld dieser Biegefeder bei mehreren angelegten Knickkräften,

Figur 5:        ein erstes Ausführungsbeispiel des Schalters zur Steuerung eines Ventils,

Figur 5a:       eine Detail-Darstellung des Ventilsitzes,

Figur 6:        Zugkraft-Hub-Kennlinien bei zwei Magnetleistungen eines Ventils nach Stand der Technik und dem erfindungsgemäßen Ventil,

Figur 7:        ein zweites Ausführungsbeispiel des erfindungsgemäßen Schalters zur Steuerung eines Mikroschalters,

Figuren 8-10:     die Kennlinien der Anordnung gemäß Fig. 8,

Figur 11:         ein drittes Ausführungsbeispiel des erfindungs-
                  gemäßen Schalters als Druckwächter bzw. Druckregler in einem Hydraulik- oder Pneumatiksystem.

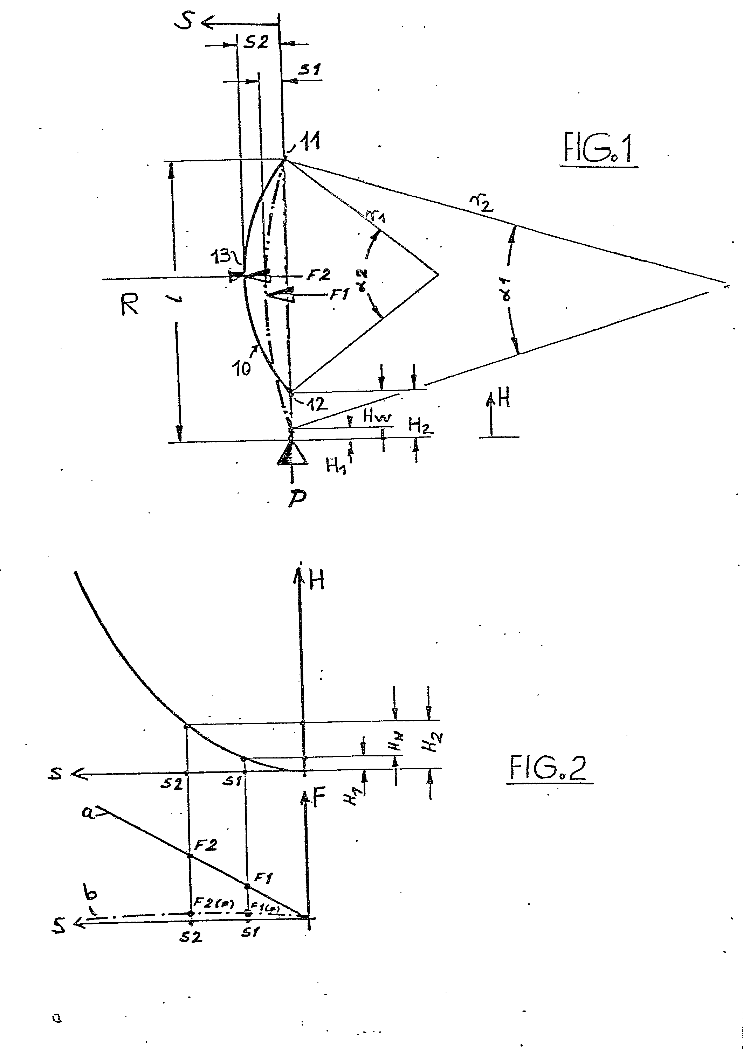

Die Darstellung der Figur 1 zeigt als Schaltelement eine Biegefeder 10 mit ihren zwei Endpunkten 11 und 12 und einem Mittelbereich 13. In ihrem oberen Endpunkt 11 ist die Biegefeder stationär
gehalten, der untere Endpunkt 12 verschiebt sich bei Durchbiegung
der Biegefeder 10 entlang der Längsachse der Biegefeder in ihrem
gestreckten Zustand (Länge 1). Mit zunehmender Durchbiegung S
verkürzt sich somit die Projektion der Länge auf die Längsachse um
einen Weg H, die geometrische Biegkennlinie zwischen S und H ist
in der oberen Hälfte von Fig. 2 dargestellt, sie ergibt sich aus
geometrischen Überlegungen zu

$$H = 1 - 2 \times r \times \sin(\alpha/2)$$

Mit Figur 1 sind zwei Durchbiegungen $S_1, S_2$ mit den zugehörigen
Biegeradien $r_1, r_2$ und den Biegewinkeln $\alpha_1$, $\alpha_2$ dargestellt,
sowie die zugehörigen Verkürzungen $H_1$ und $H_2$.

Sowohl die Durchbiegung S als auch die Verkürzungen H können nun
als Schaltweg, beispielsweise als Ventilhub, verwendet werden,
wobei die charakteristischen Eigenschaften der Biegefeder hinsichtlich der an ihr angreifenden Kräfte bzw. auftretenden Reaktionskräfte ausgenutzt werden, die im folgenden noch kurz erläutert
werden:

Die in Fig. 1 dargestellte Durchbiegung wird durch ein Biegemoment
verursacht, das entweder von einer senkrecht zur Längsachse der
Biegefeder 10 wirkenden Biegekraft F oder einer in der Längsachse der gestreckten Biegefeder wirkenden Knickkraft P (oder von diesen beiden Kräften gemeinsam) aufgebracht werden kann. Liegt ausschließlich eine Biegekraft F vor, so ergibt sich die in Fig. 2 mit a gekennzeichnete Kennlinie. Liegt außerdem eine zusätzliche Knickkraft P· vor, so reduziert diese Knickkraft P die für eine gegebene Durchbiegung S erforderliche Biegekraft F, die mit b in Fig. 2 dargestellte Kennlinie liegt daher unterhalb der Kennlinie a, da die Biegekraft F nur noch das "restliche" Biegemoment erzeugen muß. Wesentlich ist also, daß in Abhängigkeit von einer axialen Belastung (Knickkraft P) der Biegefeder 10 sich unterschiedliche Biegekraft-Durchbiegungs-Kennlinien ergeben.

Da die Biegefeder bei den erfindungsgemäßen Anwendungen eine derartige axiale Belastung erfährt, müssen die Federabmessungen derart auf den jeweiligen Anwendungsfall abgestimmt werden, daß entweder bei der maximalen Knickkraft gerade noch keine Ausknickung auftritt, oder aber ab einer definierten Knickkraft eine solche Ausknickung gezielt erfolgt.

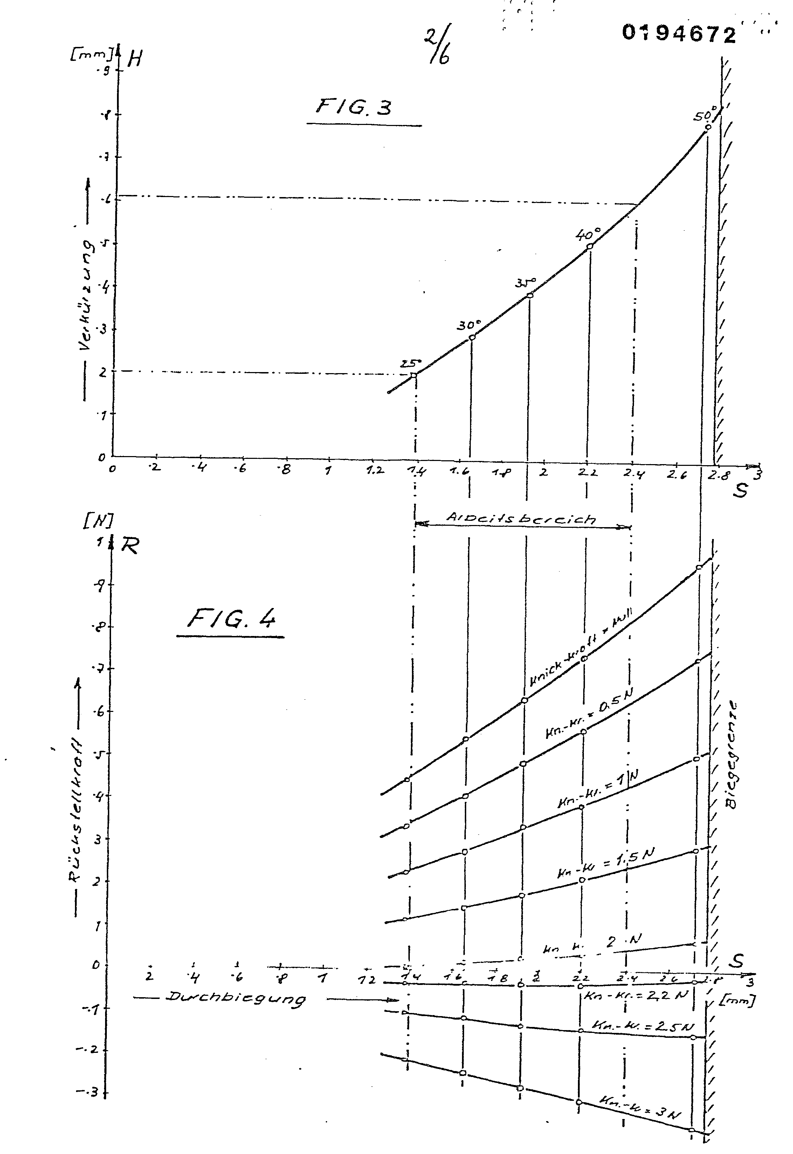

Figur 3 zeigt die Biegekennlinie einer Biegefeder aus $CuBe_2$ mit einer Breite von 12 mm, einer Länge von 25,33 mm und einer Dicke von 0,1 mm. An der Kurve angegeben sind dabei die Biegewinkel $\alpha$.

Figur 4 zeigt den Zusammenhang (Kennlinienfeld) zwischen der Rückstellkraft R der Biegefeder und der Durchbiegung S bei verschiedenen Knickkräften P als Parameter. Man erkennt, daß sich durch Wahl einer äußeren Knickkraft P die Federcharakteristik ("Federkonstante") verändern läßt; die Ausnutzung dieser Eigenschaft spielt eine wesentliche Rolle beim Einsatz des erfindungsgemäßen Kraftwandlers.

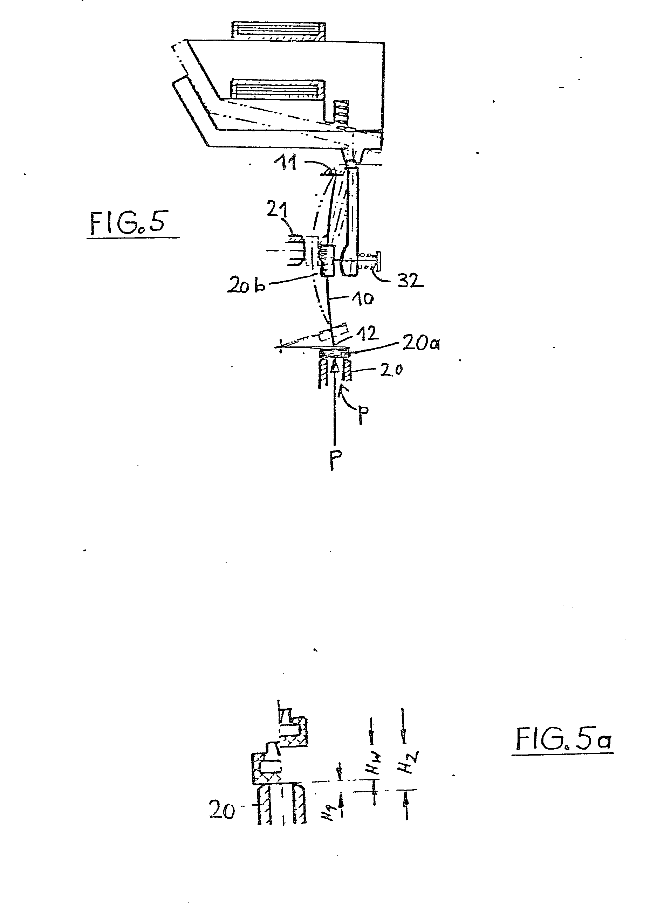

Als erstes Ausführungsbeispiel des Kraftwandlers unter Anwendung der oben beschriebenen Grundsätze ist in Fig. 5 eine Prinzipdarstellung eines 3/2-Wege-Ventils gezeigt. Hierbei liegt die Längsachse der Biegefeder 10 parallel zur Achse des Ventilsitzes, das obere Ende 11 der Biegefeder ist hierbei ortsfest aber kraftfrei drehbar gelagert, das untere Ende 12 trägt eine Ventildichtung 20a, ebenso der Mittenbereich 13 eine Ventildichtung 20b. Die beiden Düsen 20,21 sind senkrecht zueinander so angeordnet, daß in den beiden Schaltpositionen der Biegefeder 10 die Düsen 20,21 wechselweise verschlossen werden.

Bei dieser Anwendung ist also die äußere Knickkraft P die vom Systemdruck p auf die Dichtung 20a ausgeübte Kraft, die Biegekraft F ist die Betätigungskraft des Ventilsystems. Die Biegefeder ist dabei so dimensioniert, daß die vom Systemdruck erzeugte Knickkraft P im gesamten Hubbereich kleiner als die jeweilige Streckkraft der Biegefeder ist, so daß in jeder Stellung durch Wegnahme der Biegekraft der Schließvorgang selbsttätig eingeleitet wird.

Zur Unterstützung der Streckkraft kann eine Hilfsfeder 32 vorgesehen sein, womit eine Erhöhung der Dichtkraft am Ventilsitz erzielt werden kann.

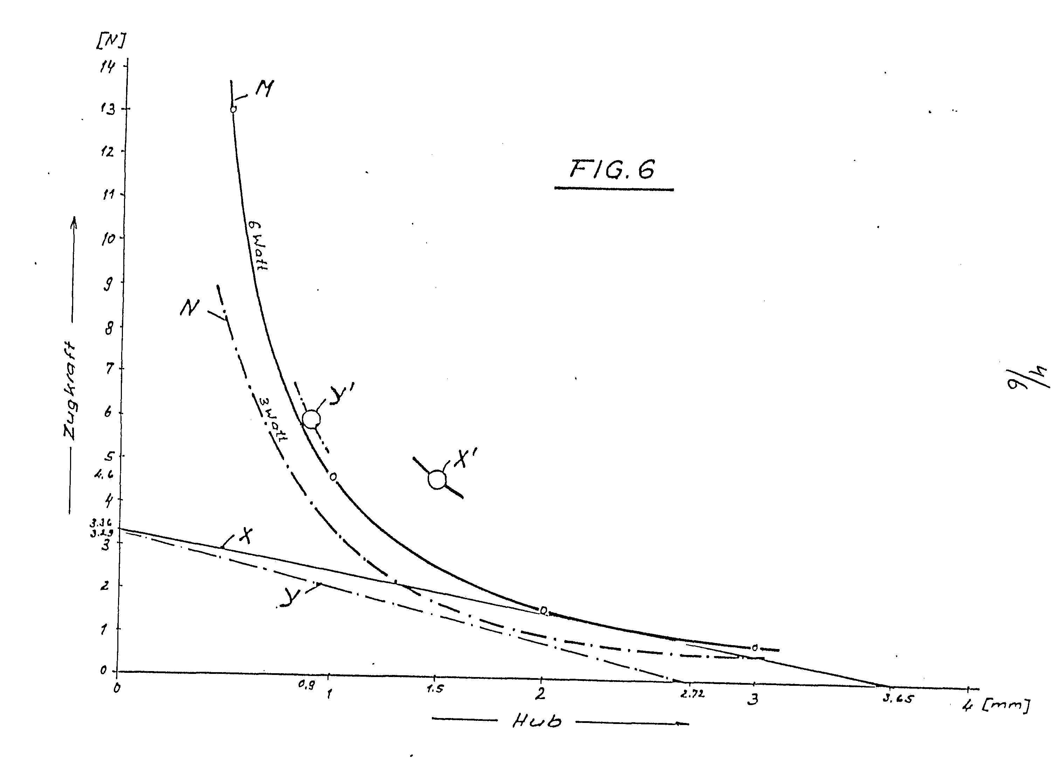

Figur 6 zeigt die Hub-Kraftkennlinien (Kurven M und N) eines herkömmlichen, 30 mm breiten Magnetsystems mit 9 mm dickem Anker bei 3 Watt und 6 Watt Leistungsaufnahme bei gleichem Wickelvolumen sowie zwei Biegefeder-Kennlinien (X und Y) bei einer Anordnung gemäß Fig. 5. Die Federkennlinie X tangiert gerade die 6 Watt-Kennlinie M und ist somit ein zulässiger Grenzfall für das 6 Watt-Magnetsystem.

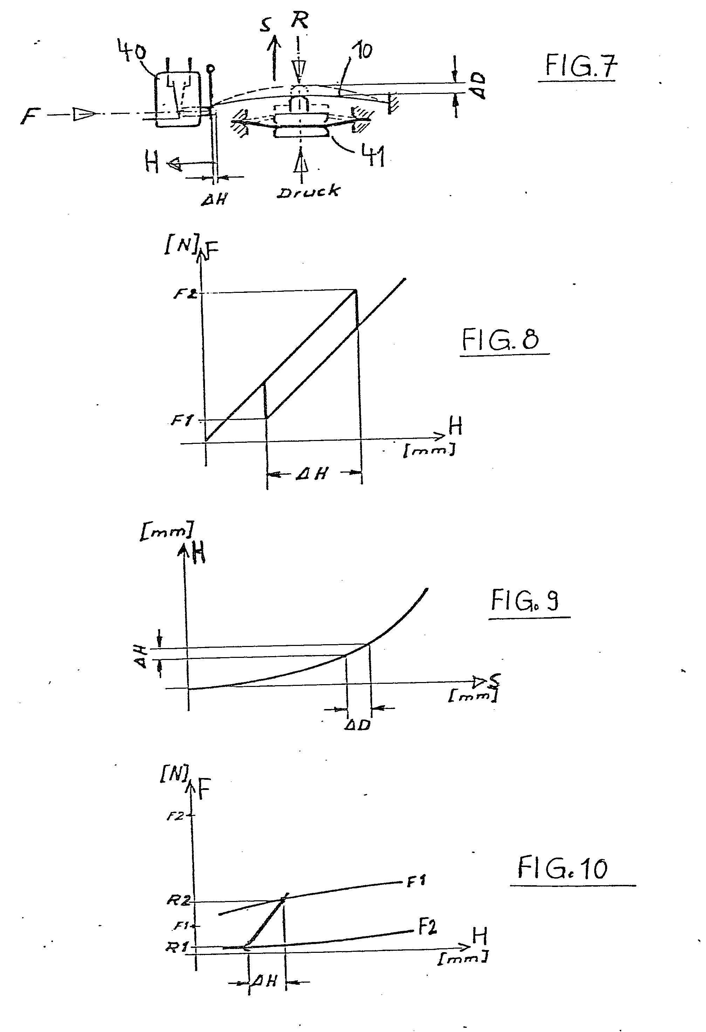

Die Federkennlinie Y liegt unterhalb der 3 Watt-Kennlinie N und kann somit sicher von einem solchen Magnetteil geschalten werden. Mit diesen Federn lassen sich mit einem Ventilsystem gemäß Fig. 5 Druckwerte erreichen, wie sie normalerweise nur von wesentlich

größeren Magneten erbracht werden. Zum Vergleich mit einem vorbekannten Magnetsystem sind in Fig. 7 zwei Kurvenpunkte Y',X' eingezeichnet, die diejenigen Leistungskurven andeuten, die ein konventionelles Magnetsystem haben müßte, um die Drücke schalten zu können, die ein Blattfedersystem bereits mit der gegebenen Leistungsaufnahme schalten kann. Für ein Ventil mit der Kennlinie X wären statt 6 Watt ca. 15 Watt erforderlich, zum Schalten eines entsprechenden konventionellen Magnetventils mit einer Schließkraft entsprechend der Schließkraft eines Blattfeder-Ventils mit der Kennlinie Y wären anstatt 3 Watt ca. 7-8 Watt erforderlich.

Diese Reduzierung der Leistungsaufnahme bei gleicher Schaltleistung gegenüber bekannten Ventilen ermöglicht beispielsweise eine wesentlich geringere Baugröße des Magnetsystems und beträchtliche Einsparungen an Kupfer für die Wicklungen.

In Figur 7 ist ein zweites Anwendungsbeispiel des erfindungsgemäßen Blattfeder-Schalters dargestellt in Zusammenarbeit mit einem Mikroschalter 40 und einem Kolben 41. Hierbei dient der Kraftwandler zur Verringerung der Betätigungskraft des Mikroschalters für den Kolben 41. Hierbei werden die Eigenschaften ausgenutzt, wie sie im Zusammenhang mit der Fig. 4 erläutert wurden, nämlich die Eigenschaften des erfindungsgemäßen Systems, daß durch Vorgabe einer äußeren Knickkraft P die Steigung der Biegekraftkennlinie bis hin zu negativen Werten verändert werden kann. Dieses Prinzip wird beim Druckschalter gemäß Fig. 7 ausgenutzt, mit der Verkleinerung der Betätigungskraft des Mikroschalters 40 sinkt der Ansprechdruck bzw. steigert sich die Empfindlichkeit des Druckschalters. Dadurch wird es möglich, besonders klein bauende Druckwächter für niedrige Ansprechdrücke zu bauen.

Zur Erläuterung dieses Verhaltens ist in Fig. 8 die Schaltcharakteristik des Mikroschalters 40 dargestellt, in Fig. 9 die Wegecharakteristik der Biegefeder, und in Fig. 10 die Federkennlinie bei den beiden Schalterkräften F2 und F1 in den beiden Schaltzuständen des Mikroschalters 40. Zur Umschaltung des Mikroschalters 40 ist eine Kraft F2-F1 erforderlich, wie dies aus der Schalthysterese der Fig. 8 hervorgeht. Die beiden Schalterkräfte F1 und F2 stellen aber nichts anderes dar als vorgegebene Knickkräfte bezüglich der Biegefeder 10, die jeweils eine unterschiedliche Kennlinie der Biegefeder bestimmen (Fig. 10 und Fig. 4). Anstelle des Schalthubes $\Delta$ H beim Übergang von der Schalterkraft F1 zur Schalterkraft F2 tritt daher ein Schalthub $\Delta$ D mit einer Änderung der Rückstellkraft R2-R1, die wesentlich geringer ist als die Differenz F2 - F1. Durch Wahl des Arbeitsbereiches auf der Biegefeder-Kennlinie (Fig. 9) kann man somit das Übersetzungsverhältnis Umschaltweg/Membranhub bzw. das Untersetzungsverhältnis F2-F1/R2-R1 festlegen.

Da insbesondere bei Flachmembranen der erforderliche Membranhub $\Delta$ D sehr stark den Mindestdurchmesser der hierfür erforderlichen Membran bestimmt, ist die dargestellte Lösung in erster Linie für Geräte für niedrige Drücke vorteilhaft, da bei diesen schon aus Kraftgründen größere Membranen erforderlich sind.

Druckschalter für höhere Drücke besitzen einen möglichst kleinen Membrandurchmesser, zur Anwendung der Biegefeder in einem derartigen Druckschalter für hohe Drücke kann man das in Fig. 8 dargestellte Prinzip durch Vertauschen von Mikroschalter und Membran anwenden, wobei die Biegefeder in diesem Falle so auszulegen ist, daß ihre Biegekraft in fast entspannter Lage immer noch höher ist als die Betätigungskraft des Mikroschalters. Dies kann durch eine zusätzliche Fremdkraft auf die Biegefedermitte erreicht werden. Bei einer derartigen Anordnung ist das Verhältnis Membranweg/Umschaltweg umgekehrt, der nunmehr erforderliche Minimalhub bei der Membrane läßt nun auch kleinste Abmessungen zu, was zu einer Verminderung der erforderlichen Berstfestigkeit bei der verwendeten Membranqualität und zu einer Verkleinerung der Einstellfeder für den Arbeitsdruckbereich führt.

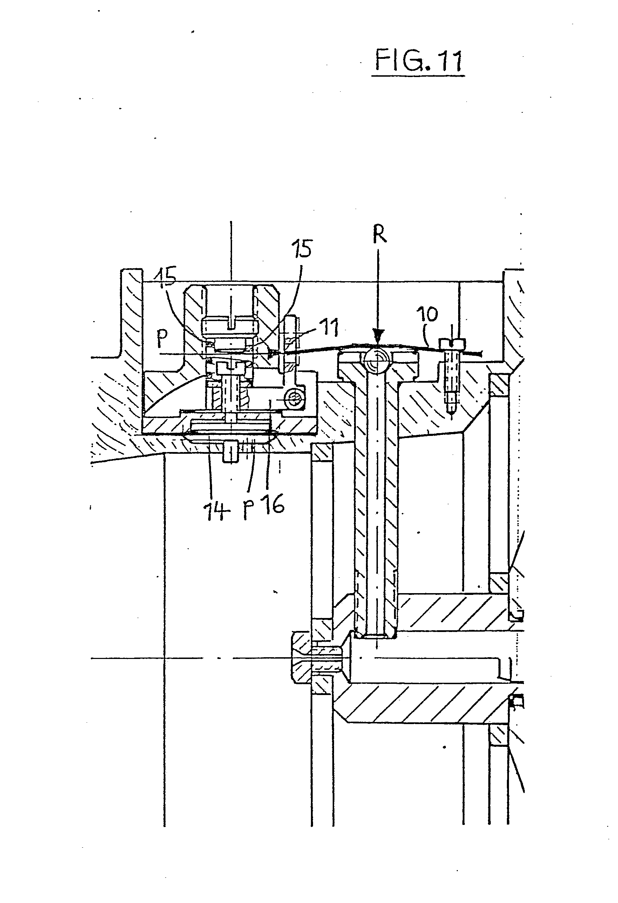

Ein drittes Ausführungsbeispiel des erfindungsgemäßen Blattfeder-wandlers ist in Fig. 11 dargestellt. Es handelt sich hierbei um die Anwendung der Biegefeder als Sicherheitsventil, wobei im Unterschied zum ersten Ausführungsbeispiel die Ventilöffnung hier unterhalb der Blattmitte der Blattfeder angeordnet ist. Die Blattfeder befindet sich im durchgebogenen Zustand, so daß die Biegekraft als Schließkraft auf die Ventilkugel wirkt. Das linke Federlager 11 ist als drehbarer Winkelhebel 16 ausgebildet, dessen anderes Ende auf einem Membranteller 14 ruht; der Membranteller 14 wird auf seiner Unterseite vom Systemdruck p beaufschlagt und setzt diesen Systemdruck p entsprechend seiner Wirkfläche in eine nach oben gerichtete Kraft um. Sobald diese Kraft größer als die Vorspannkraft einer Einstellfeder 15 ist, überträgt der Winkelhebel 16 die weitere, resultierende Kraft als Knickkraft P auf die Biegefeder 10 und verändert deren Federkonstante (vergl. Fig. 4) bei weiter steigendem Systemdruck p bis zum Ausknicken der Biegefeder 10 (negative Federkonstante).

Je nach Dimensionierung von Biegefeder und Ventil kann somit ein äußerst feinfühliges Druckregelsystem erzielt werden, das gegen Druckerhöhung mit zunehmender Empfindlichkeit bis zum Schaltver-halten reagiert.

Kurt Stähle, Liebenzeller Straße 16, 7531 Neuhausen/Steinegg

<u>Mechanischer Kraftwandler.</u>

1. Mechanischer Kraftwandler mit einem elastisch verformbaren Element, an dem eine Kraft angreift und gegen eine Gegenkraft wirkt, dadurch gekennzeichnet, daß das elastisch verformbare Element mindestens eine Biegefeder, vorzugsweise eine Blattfeder (10), ist, daß der Angriffspunkt der Kraft entweder im Mittelbereich (13) der Biegefeder (10) und ihre Angriffsrichtung im wesentlichen senkrecht zur Längsachse der Biegefeder (10) liegt, oder der Angriffspunkt der Kraft in einem Endpunkt (12) der Biegefeder (10) liegt und ihre Angriffsrichtung in der Längsachse der Biegefeder im gestreckten Zustand liegt.

2. Mechanischer Kraftwandler nach Anspruch 1, dadurch gekennzeichnet, daß er als Schalter verwendet wird, wobei der jeweils andere Bereich, Mittelbereich (13) oder Endpunkt (12), bei der Durchbiegung gegen die Rückstellkraft der Biegefeder (10) den Schaltweg (H) definiert.

3. Kraftwandler nach Anspruch 1 und 2, dadurch gekennzeichnet, daß der Angriffspunkt der Schaltkraft im Mittelbereich (13) der Biegefeder (10) und die Richtung senkrecht zu dieser liegt und der eine Endpunkt (12) der Biegefeder (10) zur Beaufschla – gung einer Ventildüse (20) dient, und daß die Biegefeder (10) hinsichtlich ihrer Abmessung und ihres Materials so dimensioniert ist, daß ihre dort auftretende Steckkraft gegen die axial wirkende Kraft des Ventilsystems infolge des Ventildruckes das Ventil geschlossen hält.

4. Kraftwandler nach Anspruch 1, gekennzeichnet durch seine Verwendung zur Auslösung des Schaltvorgangs bei Überschreitung eines vorgegebenen Systemdrucks (p) in einem Hydraulik- oder Pneumatiksystem.

5. Kraftwandler nach Anspruch 4, dadurch gekennzeichnet, daß im einen Endpunkt (11) eine variabel vorgebbare Vorspannungskraft (Knickkraft P) axial zur Biegefeder (10) angreift, mit welcher die spezifische Biegekraftkennlinie (Federkonstante) der Biegefeder (10) bestimmt wird.

6. Mechanischer Kraftwandler nach Anspruch 5, dadurch gekennzeichnet, daß der Mittenbereich der Biegefeder (10) im durchgebogenen Zustand eine Ventilöffnung (Ventilsitz) eines Hydraulik- oder Pneumatiksystems mit der Biegekraft (R) schließt und daß der Systemdruck (p) mittels einer Membran- oder Kolbenfläche (14) in eine abrufbare Kraft umgeformt wird, welche als Knickkraft (P) auf die Biegefeder (10) wirkt, und somit die Biegekraftkennlinie beeinflußt.

7. Kraftwandler nach Anspruch 1 und 2, gekennzeichnet durch seine Verwendung zur Verminderung der Betätigungskraft eines Mikroschalters.

8. Kraftwandler nach Anspruch 7, dadurch gekennzeichnet, daß der Schaltnocken des Mikroschalters (40) den einen Endpunkt der Biegefeder (10) axial beaufschlagt, der Mittenbereich der Biegefeder (10) über eine Membran beaufschlagt wird, so daß der an der Membran angreifende Druck über die Biegefeder auf den Mikroschalter wirkt (Verwendung als Druckschalter).

9. Kraftwandler nach Anspruch 1 und 2, gekennzeichnet durch seine Verwendung zur Verminderung des Membran- oder Kolbenhubes eines Druckschalters.

10. Kraftwandler nach Anspruch 9, dadurch gekennzeichnet, daß das Schaltelement eines Schalters den Mittenbereich der Biegefeder (10) kontaktiert, und daß der eine Endpunkt der Biegefeder (10) an der Membran bzw. dem Kolben angreift.

FIG.1

FIG.2

FIG. 3

FIG. 4

2/6

0194672

FIG.5

11

21

20b

32

10

12

20a

20

P

P

FIG.5a

20

$H_1$

$H_W$

$H_2$

FIG. 6

0194672

FIG.7

FIG.8

FIG.9

FIG.10

## FIG.11